# EUROPEAN PATENT SPECIFICATION

(11) **EP 1 682 798 B1**
(45) Date of publication and mention of the grant of the patent: **07.01.2009**
(21) Application number: 04798459.6
(22) Date of filing: 10.11.2004
(51) Int. Cl.: F16H 37/08, F16H 37/10

(54) **CONTINUOUSLY VARIABLE RATIO TRANSMISSION**
STUFENLOSES GETRIEBE
TRANSMISSION A VARIATION CONTINUE

(30) Priority: 10.11.2003 GB 0326199
(43) Date of publication of application: 26.07.2006
(73) Proprietor: TOROTRAK (DEVELOPMENT) LTD., Leyland, Lancashire PR26 7UX (GB)
(72) Inventor: OLIVER, Robert Andrew, Preston PR5 5YQ (GB); FIELDING, Alan, Lancashire PR26 7 UX (GB)
(74) Representative: Manley, Nicholas Michael
(86) International application number: PCT/GB2004/004736
(87) International publication number: WO 2005/047736

(56) References cited:
- EP-A- 1 061 288
- DE-A1- 10 154 095
- US-A- 4 823 640
- US-A- 5 564 998
- US-A- 5 643 121

## Description

The present invention relates to continuously variable ratio transmissions ("CVTs"). The invention is particularly applicable to such transmissions for industrial or agricultural vehicles, for example tractors, which require a very high torque at low speeds and which often require the vehicle to be shuttled back and forth at low speeds, but which also have the requirement for high forward and high reverse regimes for higher speed, lower torque conditions.

Reference is made to DE 101 54 095 in which a gear change box arrangement for vehicles comprises a superimposed drive of a planet gear type arranged in the power flow between an input shaft and a toroidal drive so that the input shaft and the inlet- and outlet-side central gear of the toroidal drive are each connected in a rotationally fixed manner to a drive element (e.g. the outer central gear, sun gear or inner central gear) of the superimposed drive. A central gear of the toroidal drive is connected to the sun gear of the superimposed drive and the input shaft is connected to a central gear of the superimposed drive.

Reference is also made to EP-A-1 061 288 which discloses a multi-range continuously variable transmission (CVT) and a final drive mechanism. The CVT has a continuously variable unit (CVU) and a planetary gear set. A plurality of friction devices are selectively connectable to establish three forward ranges and one reverse range and the CVU is effective to provide infinitely variable ratios between the engine and the final drive mechanism. One friction device is engaged during a geared neutral condition, a first forward range and a reverse range. The neutral condition is established by setting the CVU at a predetermined ratio. The reverse range is operated by changing the CVU ratio toward a maximum underdrive ratio from the neutral condition and the first forward range is operated by changing the CVU ratio toward a maximum overdrive ratio. The second and third forward ranges are established by synchronously interchanging friction devices.

In accordance with a first aspect of the present invention, there is provided a continuously variable ratio transmission (CVT) comprising:
(a) a ratio varying unit ("variator");
(b) a first epicyclic having two inputs connected to opposite sides of the variator:
(c) a second epicyclic having an input driven by a prime mover and components connected to opposite sides of the variator:
(d) a final drive shaft;
(e) a low regime clutch for selectively connecting the output of the first epicyclic to the final drive shaft in low regime;
(f) a third, mixing, epicyclic connected to the output of the first epicyclic and connected or connectable to the variator and being connectible with the final drive shaft in high regime by way of a high regime clutch;
wherein the high and low regimes are coincident at at least one variator ratio and the variator operates in opposite directions in the low and high regimes.

Preferably, the operation ranges of the high and low regimes overlap.

In accordance with a second aspect of the present invention there is provided a continuously variable ratio transmission (CVT) comprising:
(a) a ratio varying unit ("variator");
(b) a first epicyclic having two inputs connected to opposite sides of the variator:
(c) a second epicyclic having an input driven by a prime mover and components connected to opposite sides of the variator:
(d) a final drive shaft connectible with the variator by way of one of two alternative driven rotatable members connected to opposite sides of the variator respectively; and
(e) a first clutch disposed between an output of the first epicyclic and the final drive shaft for selectively connecting the output of the first epicyclic to the final drive shaft:
the transmission further comprising:
a third, mixing, epicyclic disposed between at least one of the driven rotatable members and the final drive shaft and receiving inputs from the output of the first epicyclic and said driven rotatable shaft; and
a second clutch disposed between said one driven rotatable member and the final drive shaft for selectively connecting the said one driven rotatable member to the final drive shaft via the third epicyclic.

In one embodiment a third clutch is disposed between said other driven rotatable member and the final drive shaft for selectively connecting the said other driven rotatable member to the final drive shaft via the third epicyclic.

The second and third clutches are preferably disposed respectively between the said one driven rotatable member and the third epicyclic and between the said other driven rotatable member and the third epicyclic.

In another embodiment, a fourth epicyclic is disposed between said other driven rotatable member and the final drive shaft and receiving inputs from the output of the first epicyclic and said other driven rotatable shaft and a third clutch is disposed between said other driven rotatable member and the final drive shaft for selectively connecting the said other driven rotatable member to the final drive shaft via the fourth epicyclic.

The second and third clutches are preferably disposed respectively between the third epicyclic and the final drive shaft and the fourth epicyclic and the final drive shaft.

By way of example only, specific embodiments of the present invention will now be described, with reference to the accompanying drawings, in which :-
Fig. 1 is a diagrammatic representation of a first embodiment of CVT in accordance with the present invention;
Fig. 2 is a representation of the transmission of Fig. 1, which illustrates the transmission gearing in more detail;
Fig. 3 is a graph illustrating the operation of the first embodiment: and
Fig. 4 is a diagrammatic representation of a second embodiment of CVT in accordance with the present invention.

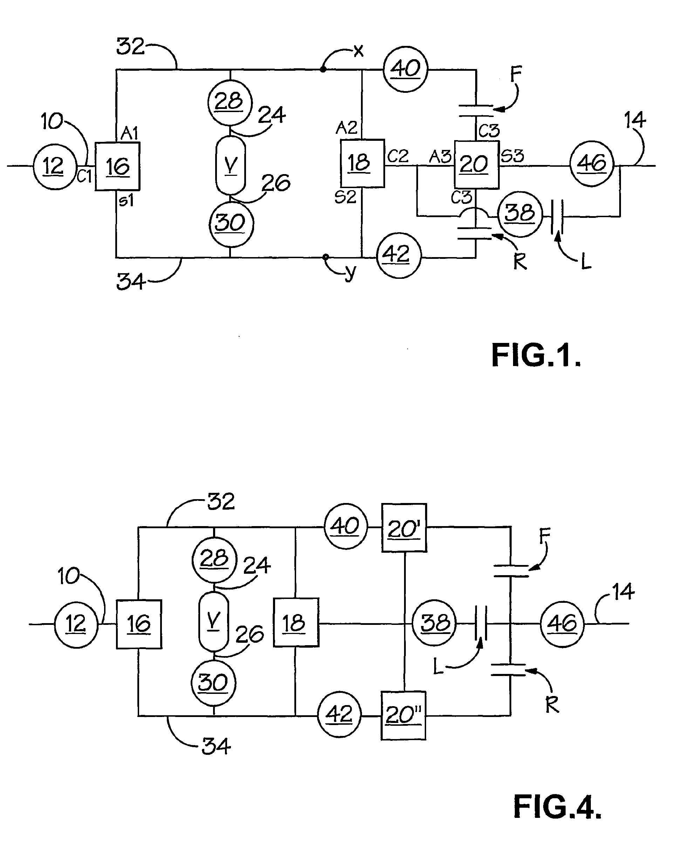

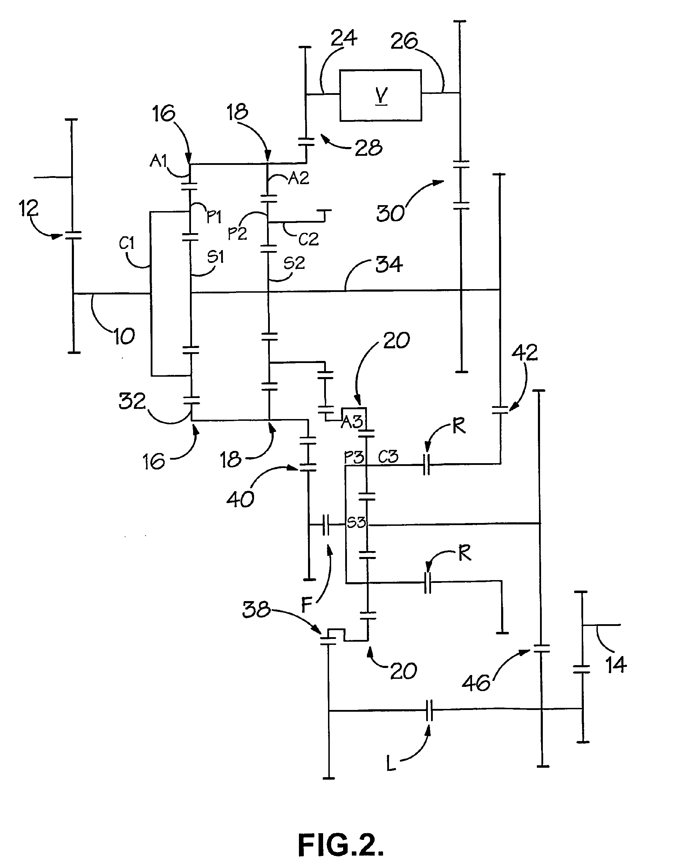

Referring to Figs. 1 and 2, a CVT has an input shaft 10, connected to a prime mover via reduction gearing 12, an output shaft 14, a variator V of the toroidal-race rolling traction type, an input epicyclic 16, a recirculating epicyclic 18 and a mixing epicyclic 20. Reference numerals 24,26 indicate shafts connected to opposite sides of the variator V, which are connected via reduction gearing 28,30 to rotating members (hereinafter referred to as "shafts", for convenience) 32,34 which are in turn connected to two components (the annulus A1 and the sun gear S1 respectively) of the input epicyclic 16, the remaining component (the planet carrier C1) being connected to the input shaft 10.

The shafts 32,34 are also connected to two components (the annulus A2 and the sun gear S2) of the recirculating epicyclic 18, the third component (the planet carrier C2) being connected by engagement of a low regime clutch L and via reduction gearing 38 to the output shaft 14.

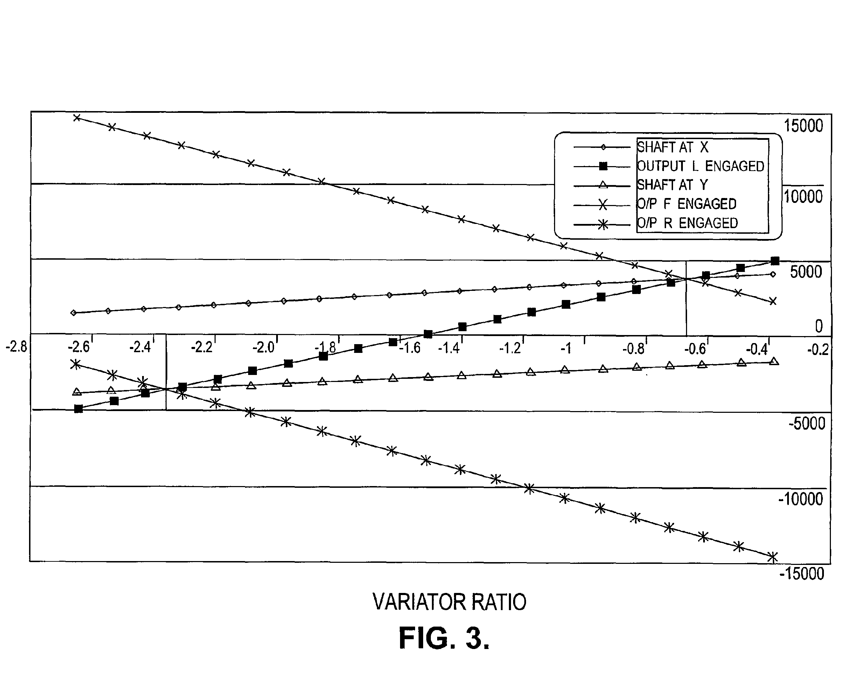

In addition, the shafts 32,34 are selectively and alternatively connectible via respective reduction gearing 40,42 and respective high regime forward and reverse clutches F,R to the same component (the planet carrier C3) of the mixing epicyclic 20, another component (the annulus A3) of the epicyclic being permanently connected to the output (the planet carrier C2) of the recirculating epicyclic 18. In low regime, the low regime clutch L is engaged and the high regime forward and reverse clutches F,R are disengaged. In low regime, power recirculates through the epicyclic 18 and, as shown in Fig. 3 by the line "Output L engaged", as the variator V progresses from one end of its ratio range to the other the speed of the output shaft 14 can be arranged to make a continuous "low regime" progression from a finite maximum value in one direction, falling to zero and then climbing to a second maximum value in the opposite direction. In this way, the transmission can shuttle easily between reverse and forward without having to change regime. This is important for off highway vehicles such as tractors and the like in which the transmission transmits high levels of torque at low vehicle speeds, during which it is preferable to avoid regime changes if possible.

It will also be seen from Fig. 3 that for each of a particular forward and reverse speed of the output shaft 14 there is a variator ratio (approximately -0.68 and -2.74, corresponding to an ouput shaft speed of about 4,000 rpm) at which the output from the mixing epicyclic 20, if it were to be connected by the respective high regime forward or reverse clutch F,R, would be identical to the output from the mixing epicyclic 18 on engagement of the low regime clutch L, i.e. the two inputs to the mixing epicyclic 20 would be identical. This is known as "synchronous ratio" and at that ratio the forward or reverse clutch F,R can be engaged, depending on the direction of rotation of the output shaft 14, and the low regime clutch L can be disengaged in order to place the transmission in a high forward or high reverse regime as appropriate.

In high forward or high reverse regime, as illustrated in Fig. 3, the variator ratio is adjusted in the opposite direction as compared with low regime operation in order to increase the speed of the output shaft 14. In these regimes, the drive of one of the shafts 32, 34 is connected to the output shaft 14 via the engaged clutch F or R, the mixing epicyclic 20 (through the output component, sun gear S3) and reduction gearing 46.

A second embodiment is illustrated in Fig. 4. This is very similar to the first embodiment and the same reference numerals are used to describe corresponding features. The main difference is that the single mixing epicyclic 20 of the first embodiment is replaced with two mixing epicyclics 20', 20", a component (the planet carrier) of each of which is connected to a respective one of the two shafts 32,34, a further component (the sun gear) of each of the epicyclics 20', 20" being selectively and alternatively connectible to the output shaft 14 via forward and reverse high regime clutches F,R respectively. In a similar manner to the first embodiment, the output of the recirculating epicyclic 18 is connected to a component (the annulus) of each of the forward and reverse mixing epicyclics 20', 20" and is also connectible via a low regime clutch L to the output shaft 14. When high forward or high reverse regime is required at synchronous ratio, the appropriate forward or reverse clutch F,R is engaged and the low regime clutch L is disengaged to connect the output of the appropriate mixing epicyclic 20', 20" to the output shaft 14 via the reduction gearing.

The invention is defined by the claims and not restricted to the details of the foregoing embodiments.

## Claims

1. A continuously variable ratio transmission (CVT) comprising:
(a) a ratio varying unit ("variator") (V);
(b) a first epicyclic (18) having two inputs (A2,S2) connected to opposite sides of the variator:
(c) a second epicyclic (16) having an input (10) driven by a prime mover and components (A1, S1) connected to opposite sides of the variator:
(d) a final drive shaft (14);
(e) a low regime clutch (L) for selectively connecting the output of the first epicyclic (18) to the final drive shaft in low regime;
(f) a third, mixing, epicyclic (20) connected to the output of the first epicyclic (18) and connectable to the variator (V) and being connectible with the final drive shaft in high regime by way of a high regime clutch (F);
wherein the high and low regimes are coincident at at least one variator ratio and the variator operates in opposite directions in the low and high regimes.

2. A continuously variable ratio transmission (CVT) as claimed in claim 1, wherein the operation ranges of the high and low regimes overlap.

3. A continuously variable ratio transmission (CVT) comprising:
(a) a ratio varying unit ("variator") (V);
(b) a first epicyclic (18) having two inputs (A2, S2) connected to opposite sides of the variator:
(c) a second epicyclic (16) having an input (10) driven by a prime mover and components (A1, S1) connected to opposite sides of the variator:
(d) a final drive shaft (14) connectible with the variator (V) by way of one of two alternative driven rotatable members (24, 26) connected to opposite sides of the variator respectively; and
a first clutch (L) disposed between an output of the first epicyclic (18) and the final drive shaft for selectively connecting the output of the first epicyclic to the final drive shaft:
the transmission further comprising:
a third, mixing, epicyclic (20) disposed between at least one of the driven rotatable members (24) and the final drive shaft and receiving inputs from the output of the first epicyclic (18) and said driven rotatable shaft (24); and
a second clutch (F) disposed between said one driven rotatable member (24) and the final drive shaft (14) for selectively connecting the said one driven rotatable member to the final drive shaft via the third epicyclic (20).

4. A CVT as claimed in claim 3, further comprising a third clutch (R) disposed between said other driven rotatable member (26) and the final drive shaft for selectively connecting the said other driven rotatable member (26) to the final drive shaft via the third epicyclic.

5. A CVT as claimed in claim 4, wherein the second and third clutches (F, R) are disposed respectively between the said one driven rotatable member (24) and the third epicyclic (20) and between the said other driven rotatable member (26) and the third epicyclic (20).

6. A CVT as claimed in claim 3, further comprising:
a fourth epicyclic (20") disposed between said other driven rotatable member (26) and
the final drive shaft (14) and receiving inputs from the output of the first epicyclic (18) and said other driven rotatable shaft (26); and
a third clutch (R) disposed between said other driven rotatable member (26) and the final drive shaft for selectively connecting the said other driven rotatable member to the final drive shaft via the fourth epicyclic.

7. A CVT as claimed in claim 6, wherein the second and third clutches (F, R) are disposed respectively between the third epicyclic and the final drive shaft and the fourth epicyclic and the final drive shaft.

## Patentansprüche

1. Stufenloses Getriebe (CVT), das Folgendes umfasst:
(a) eine Verhältnis-Verstelleinheit ("Variator") (V);
(b) ein erstes Umlaufrädergetriebe (18) mit zwei Eingängen (A2, S2), die mit gegenüberliegenden Seiten des Variators verbunden sind;
(c) ein zweites Umlaufrädergetriebe (16) mit einem Eingang (10), der von einer Antriebsmaschine angetrieben wird und Komponenten (A1, S1), die mit gegenüberliegenden Seiten des Variators verbunden sind;
(d) eine Achsantriebswelle (14);
(e) eine Low-Bereich-Kupplung (L) zum selektiven Verbinden des Ausgangs des ersten Umlaufrädergetriebes (18) mit der Achsantriebswelle im Low-Bereich;
(f) ein drittes, Summier-Umlaufrädergetriebe (20), das mit dem Ausgang des ersten Umlaufrädergetriebes (18) verbunden ist und mit dem Variator (V) verbindbar ist und mittels einer High-Bereich-Kupplung (F) im High-Bereich mit der Achsantriebswelle verbindbar ist;
wobei der High-Bereich und der Low-Bereich bei mindestens einem Variatorverhältnis zusammenfallen und der Variator im Low-Bereich und im High-Bereich in entgegengesetzten Richtungen arbeitet.

2. Stufenloses Getriebe (CVT) nach Anspruch 1, wobei die Betriebsbereiche des High-Bereichs und des Low-Bereichs überlappen.

3. Stufenloses Getriebe (CVT), das Folgendes umfasst:
(a) eine Verhältnis-Verstelleinheit ("Variator") (V);
(b) ein erstes Umlaufrädergetriebe (18) mit zwei Eingängen (A2, S2), die mit gegenüberliegenden Seiten des Variators verbunden sind;
(c) ein zweites Umlaufrädergetriebe (16) mit einem Eingang (10), der von einer Antriebsmaschine angetrieben wird und Komponenten (A1, S1), die mit gegenüberliegenden Seiten des Variators verbunden sind;
(d) eine Achsantriebswelle (14), die mittels einem von zwei, jeweils mit gegenüberliegenden Seiten des Variators verbundenen, alternativen angetriebenen rotierbaren Gliedern (24, 26) mit dem Variator (V) verbindbar ist; und
eine erste Kupplung (L), die zwischen einem Ausgang des ersten Umlaufrädergetriebes (18) und der Achsantriebswelle angeordnet ist, um den Ausgang des ersten Umlaufrädergetriebes selektiv mit der Achsantriebwelle zu verbinden;
wobei das Getriebe weiter Folgendes umfasst:
ein drittes, Summier-Umlaufrädergetriebe (20), das zwischen mindestens einem der angetriebenen rotierbaren Glieder (24) und der Achsantriebswelle angeordnet ist und Eingänge vom Ausgang des ersten Umlaufrädergetriebes (18) und der genannten angetriebenen rotierbaren Welle (24) empfängt; und
eine zweite Kupplung (F), die zwischen dem genannten einen angetriebenen rotierbaren Glied (24) und der Achsantriebswelle (14) angeordnet ist, um das genannte eine angetriebene rotierbare Glied über das dritte Umlaufrädergetriebe (20) selektiv mit der Achsantriebswelle zu verbinden.

4. CVT nach Anspruch 3, weiter umfassend eine dritte Kupplung (R), die zwischen dem genannten anderen angetriebenen rotierbaren Glied (26) und der Achsantriebswelle angeordnet ist, um das genannte andere angetriebene rotierbare Glied (26) über das dritte Umlaufrädergetriebe selektiv mit der Achsantriebswelle zu verbinden.

5. CVT nach Anspruch 4, wobei die zweite und die dritte Kupplung (F, R) jeweils zwischen dem genannten einen angetriebenen rotierbaren Glied (24) und dem dritten Umlaufrädergetriebe (20) bzw. zwischen dem genannten anderen angetriebenen rotierbaren Glied (26) und dem dritten Umlaufrädergetriebe (20) angeordnet sind.

6. CVT nach Anspruch 3, das weiter Folgendes umfasst:
ein viertes Umlaufrädergetriebe (20"), das zwischen dem genannten anderen angetriebenen rotierbaren Glied (26) und der Achsantriebswelle (14) angeordnet ist und Eingänge vom Ausgang des ersten Umlaufrädergetriebes (18) und der genannten anderen angetriebenen rotierbaren Welle (26) empfängt; und
eine dritte Kupplung (R), die zwischen dem genannten anderen angetriebenen rotierbaren Glied (26) und der Achsantriebswelle (14) angeordnet ist, um das genannte andere angetriebene rotierbare Glied über das vierte Umlaufrädergetriebe selektiv mit der Achsantriebswelle zu verbinden.

7. CVT nach Anspruch 6, wobei die zweite und die dritte Kupplung (F, R) jeweils zwischen dem dritten Umlaufrädergetriebe und der Achsantriebwelle bzw. dem vierten Umlaufrädergetriebe und der Achsantriebswelle angeordnet sind.

## Revendications

1. Transmission à variation continue (CVT) comportant :
(a) un module de variation de rapport (« variateur ») (V) ;
(b) un premier train épicycloïdal (18) ayant deux entrées (A2, S2) connectées au niveau des côtés opposés du variateur ;
(c) un deuxième train épicycloïdal (16) ayant une entrée (10) entraînée par un avant-train tracteur et des composants (A1, S1) connectés au niveau des côtés opposés du variateur ;
(d) un arbre de sortie (14) ;
(e) un embrayage à bas régime (L) à des fins de connexion sélective de la sortie du premier train épicycloïdal (18) à l'arbre de sortie à bas régime ;
(f) un troisième train épicycloïdal mixte (20) connecté à la sortie du premier train épicycloïdal (18) et connectable au variateur (V) et étant connectable à l'arbre de sortie à haut régime par le biais d'un embrayage à haut régime (F) ;
dans laquelle le haut régime et le bas régime coïncident à au moins un rapport de variateur et le variateur fonctionne dans des directions opposées à bas régime et à haut régime.

2. Transmission à variation continue (CVT) selon la revendication 1, dans laquelle les plages de fonctionnement du bas régime et du haut régime se chevauchent.

3. Transmission à variation continue (CVT) comportant :
(a) un module de variation de rapport (« variateur ») (V) ;
(b) un premier train épicycloïdal (18) ayant deux entrées (A2, S2) connectées au niveau des côtés opposés du variateur ;
(c) un deuxième train épicycloïdal (16) ayant une entrée (10) entraînée par un avant-train tracteur et des composants (A1, S1) connectés au niveau des côtés opposés du variateur ;
(d) un arbre de sortie (14) connectable au variateur (V) par le biais de l'un de deux organes rotatifs entraînés de manière alternée (24, 26) connectés au niveau des côtés opposés du variateur respectivement ; et
un premier embrayage (L) disposé entre une sortie du premier train épicycloïdal (18) et l'arbre de sortie à des fins de connexion sélective de la sortie du premier train épicycloïdal à l'arbre de sortie ;
la transmission comportant par ailleurs :
un troisième train épicycloïdal mixte (20) disposé entre au moins l'un des organes rotatifs entraînés (24) et l'arbre de sortie et recevant des entrées en provenance de la sortie du premier train épicycloïdal (18) et dudit arbre rotatif entraîné (24) ; et
un deuxième embrayage (F) disposé entre ledit un organe rotatif entraîné (24) et l'arbre de sortie (14) à des fins de connexion sélective dudit un organe rotatif entraîné à l'arbre de sortie par le biais du troisième train épicycloïdal (20).

4. CVT selon la revendication 3, comportant par ailleurs un troisième embrayage (R) disposé entre ledit autre organe rotatif entraîné (26) et l'arbre de sortie à des fins de connexion sélective dudit autre organe rotatif entraîné (26) à l'arbre de sortie par le biais du troisième train épicycloïdal.

5. CVT selon la revendication 4, dans laquelle ledit deuxième embrayage (F) et ledit troisième embrayage (R) sont disposés respectivement entre ledit un organe rotatif entraîné (24) et le troisième train épicycloïdal (20) et entre ledit autre organe rotatif entraîné (26) et le troisième train épicycloïdal (20).

6. CVT selon la revendication 3, comportant par ailleurs :
un quatrième train épicycloïdal (20") disposé entre ledit autre organe rotatif entraîné (26) et l'arbre de sortie (14) et recevant des entrées en provenance de la sortie du premier train épicycloïdal (18) et dudit autre arbre rotatif entraîné (26) ; et
un troisième embrayage (R) disposé entre ledit autre organe rotatif entraîné (26) et l'arbre de sortie à des fins de connexion sélective dudit autre organe rotatif entraîné à l'arbre de sortie par le biais du quatrième train épicycloïdal.

7. CVT selon la revendication 6, dans laquelle le deuxième embrayage (F) et le troisième embrayage (R) sont disposés respectivement entre le troisième train épicycloïdal et l'arbre de sortie et le quatrième train épicycloïdal et l'arbre de sortie.
